# EUROPEAN PATENT SPECIFICATION

(11) **EP 1 498 023 B1**
(45) Date of publication and mention of the grant of the patent: **02.07.2008**
(21) Application number: 04254193.8
(22) Date of filing: 13.07.2004
(51) Int. Cl.: A01G 3/033, B27B 17/00, A01G 3/08, B27B 17/14

(54) **Vegetation prunning device**
VEGETATIONSÄSTUNGSVORRICHTUNG
DISPOSITIF D'ELAGAGE DE VEGETATION

(30) Priority: 14.07.2003 GB 0316447
(43) Date of publication of application: 19.01.2005
(60) Divisional application: 05022646.3
(73) Proprietor: Black & Decker Inc., Newark, Delaware 19711 (US)
(72) Inventor: Jarman, David, Green Haworth Accrington BB5 3SJ (GB)
(74) Representative: Cavalier, Marcus Alexander Mawson

(56) References cited:
- EP-A- 0 673 727
- WO-A-03/035338
- WO-A1-03/064125
- DE-A- 2 813 380
- FR-A- 2 534 449
- GB-A- 2 354 481
- US-A- 3 113 467
- US-A- 3 382 898
- US-A- 4 294 012
- US-A- 5 174 029
- US-A- 5 636 443

## Description

The present invention relates to a vegetation pruning device and has particular, although not exclusive, relevance to such a device as would be used for gardening purposes.

There are a considerable array of tools available for the modern gardener in order to be able to keep growth of vegetation under control. The term "gardener" is meant not only to encompass small domestic concerns, but also larger more agricultural endeavours. Whatever the nature of the gardening, however, they will be a need to control the rate of growth of vegetation for either aesthetic or other purposes such as crop yields etc.

Among the many tools available for keeping vegetation growth under control are, for example, shears for pruning or cutting "light" vegetation such as grass or leaves or small twigs etc. At the other end of the scale there are hedge trimmers and the so-called chain saw used for "heavy" vegetation cutting such as trees (whether smaller branches or the entire tree).

Additionally there are smaller-scale tools such as secateurs or scissors used for more delicate pruning or cutting operations. For example, WO 03/035338 describes a motorized cutting tool comprising an automated cutting device. These motorized secateurs include a shear arrangement comprising a pair of pivotally coupled arms, a motor with a rotary output drive, and a cutting element coupled to the rotary output drive and arranged for cutting vegetation presented thereto. US-A-5,636,443 describes a pair of snips comprising a pair of arms, each arm comprising a handle portion and an operative shear portion, which arms are pivotally connected about a pivot axis disposed between the handle and operative shear portions such that relative displacement of the two handles towards or away from each other effects corresponding displacement of the two operative shear portions towards or away from one another respectively.

In any event it will be appreciated that the modem gardener will more usually choose a tool specific to the particular type of pruning operation required. For example, and with reference to the above, when light pruning is necessary of, for example, domestic flowers, then the secateurs are likely to be chosen. Alternatively if bushes are to be pruned, or grass is to be cut, then shears will often be chosen.

There exists, however, a gap in the tool array when moving from "light" bushes to "heavy" trees. Very often vegetation will be of such a size and nature (such as larger bushes or small trees) which are either of a density or branch diameter too large for shears or hedge trimmers to cope with but for which use of the chain saw is unnecessarily excessive.

It is, therefore, an object of the present invention to provide a vegetation pruning device which at least alleviates the above shortcomings by providing a novel form of tool which fits nicely in this gap. Provision of such a tool provides a compact and safe arrangement whereby pruning of the "heavier" vegetation is possible without the need to resort to the aggressive and particularly dangerous tool such as a chain saw.

According to the present invention, there is now provided a vegetation pruning device including: a shear arrangement comprising a pair of pivotally coupled arms; a motor with a rotary output drive; a cutting element coupled to the rotary output drive and arranged for cutting vegetation presented thereto, wherein the cutting element is mounted upon a support member and arranged for rotation thereabout under the influence of the rotary output drive. By provision of such a cutting element formed in a shear arrangement there is provided the adaptability and ease-of-use of the common pair of shears coupled with the more aggressive cutting capabilities of a powered cutting element, such as a chain saw, for example. Preferably, the motor and the cutting element will be operatively associated with one of the pair of pivotally coupled arms.

Preferably, the cutting element, when the shear arrangement is closed, is substantially inaccessible. This feature enhances the safety of the device when the shear arrangement is in its dosed position. It prevents the user accidentally putting their fingers or hands in contact with the cutting element - something which is desirable to avoid.

Usually, one of the pair of arms will comprise the cutting element and it is usual that the other of the pair of arms will then comprise a vegetation restraining means for restraining vegetation inserted between the pair of arms from this displacement when such vegetation is engaged with the cutting element. This allows for the vegetation to be cut to be held in abutment with the cutting element by use of the shears themselves and thus reducing the potential for injury of a users hand or fingers coming into contact with the cutting element. Since the cutting element is powered there will often be associated therewith considerable movement of the cutting element which will otherwise tend to dislodge and move the vegetation being cut and thus it is desirable to restrain such motion against the cutting force applied by the cutting element. Usually, such vegetation restraining means will comprise a series of indentations and/or projections formed on the other of the pair of arms so as to be disposed towards the cutting element to provide points of restraint or retention of said vegetation there against. It is usual that a plurality of teeth will provide such projections, such teeth preferably being inclined and facing towards the cutting element.

It is further preferable that the other of said pair of arms will also comprise a parallel pair of sidewalls defining a channel therebetween for at least partially receiving the cutting element as the cutting element is pivotally displaced towards this other of said pair of arms. Such pruning device will usually also comprise a stop member so as to limit the pivotal displacement of the arm members towards one another for effectively restraining the cutting element at a predetermined pivotal position relative to the other of said pair of arms such that the cutting element will remain received within the channel and not extend beyond such channel. This specifically allows the other of said arm to restrain the vegetation as it brought into engagement with the cutting element but since such vegetation being cut will lay transversely across these two arm members then as the cutting element passes into the channel it will effect complete cutting of any vegetation supported on theses pair of sidewalls. However, the stop member then prevents the cutting element from continuing to pass beyond such channel and is thus contained therein making access difficult by a users hand or fingers and providing additional safety feature. In one preferred embodiment of the present invention the channel may comprise an inner surface extending between these parallel sidewalls so as to define a dust/debris conveying path to collect sawdust and chippings from the cut vegetation and which conveying path will then communicate with an appropriate dust/debris extraction aperture of the pruning device. This may simply comprise an aperture through which such dust and debris may fall or may allow the attachment of an appropriate suction tool so as to carefully extract the debris from the cut vegetation in a clean and simple manner.

Alternatively, such parallel pair of sidewalls of the other of the said arms may be profiled to allow at least part of the cutting element to pass completely through such channel as the cutting element is pivotally displaced towards this other of said pair of arms. Usually, such sidewalls will present a V-shaped profile which will receive and support, in an inner apex thereof, the vegetation to be cut. The specific use of a V-shaped profile permits accurate holding of vegetation of different diameters at a predetermined, usually central, position relative to the cutting element.

A further aspect of the present invention provides for one or both of the pair of arms to include a cover portion which is resiliently biased towards the cutting element and moveable away therefrom under the application of force. Furthermore, it is advantageous that vegetation, having been pruned by this cutting element, may cause movement of the biased portion away from the cutting element. This again is a safety feature which obviates the need for the user from contacting the cutting element or vegetation in the region of the cutting element but still permits the cutting element, having but the vegetation, to pass therethrough. Usually, the one of said pair of arms comprising the cutting element will further comprise such a cover portion biased towards the cutting element. Such cover portion will usually comprise a further vegetation restraining means having a series of indentations and/or projections disposed towards the cutting element to provide points of restraint or retention of any vegetation there against. According to a preferred embodiment, such biased cover portion which is associated with the cutting element is displaceable away from the cutting element by the vegetation through which the cutting element has cut. Thus, such cover portion serves to protect the user from the cutting element by appropriate coverage thereof but permits the cutting element to pass through vegetation of a diameter greater than the depth of such cutting element without being inhibited by engagement with such cover portion which is simply displaced out of the way by the excess vegetation diameter. This enables vegetation, having been pruned, to pass by the cutting device but still be held between the biased cover portion associated with the cutting element and the other arm.

Preferably the motor rotary output drive includes a toothed wheel. The cutting element may comprise a chain. The teeth of the toothed wheel fit between the links of the chain thereby to provide motive force to the chain. The chain may further include a plurality of barbs to assist in pruning vegetation.

An actuator for controlling operation of the motor is preferable and the actuator itself is preferably a speed-controller for governing the output speed of the motor: Additionally, it is preferred that the actuator will comprise at least one resiliently biased switch member mounted on each of the two arm members, wherein the actuator will be restrained from operating the motor unless both of at least one switch members of each arm are operated by the user. This ensures that the pruning device can only be operated when the user is grasping both arm members and thus using the tool correctly. In the event that the user has an accident resulting in loss of grip on one or other of the arm members the at least one switch member mounted thereon will no longer be operated causing the motor to be stopped and thus presenting an additional safety feature. Such resiliently biased switch member may provide either mechanical or electrical restraint of the actuator when in a non-operated position.

The support member may include a driven and a drive wheel around which the cutting element moves as the drive wheel rotates. The cutting element may rotate within a first plane and the arms of the pair of arms each include a surface which may extend either side of this first plane.

In an alternative form of the present invention the cutting element may comprise a linear reciprocating blade, usually in the form of a conventional saw blade having appropriate saw teeth. Such a device will then necessitate and include an appropriate rotary to linear converting mechanism to facilitate linear reciprocating motion of the blade resultant from the rotary output of the motor.

Preferably, such vegetation pruning devices where the cutting element is mounted upon a support member, may comprise a self adjusting tensioning device to allow automatic adjustment of such support member. Usually adjustment of the support member will effect appropriate tensioning of a chain mounted thereon.

Such a self adjusting tensioning device may comprise an adjustable restraint means for releasably securing the support member relative to the pruning device together with a rigid support block rigidly secured to one of the pair of pivotally coupled arms on which that support member is mounted, which block having a resiliently biased adjustment member disposed between the support block and the support member to exert a displacement force on the support member away from the support block when the restraint member is in a released position. In a preferred embodiment of the present invention such biasing member will comprise a spring biased plunger having a first ratchet member and the support block having a second ratchet member whereby engagement between the first and second ratchet members prevents displacement of the plunger towards the support block. In this manner, should adjustment of the restraint means be effected to release and allow displacement of the support member, such support member is then biased away from the such support block by the spring biased plunger. Since a driven wheel supporting the chain is mounted on this support member and the support block will be secured from displacement relative to the driven wheel then this self adjusting tensioning device serves to displace the two wheels away from one another to effect appropriate tensioning of the chain disposed therebetween.

Further, according to the present invention there is also provided a powered vegetation pruning shears comprising a pair of arms, each arm comprising a handle portion and an operative shear portion, which arm is being pivotally connected about a pivot axis disposed between the handle and operative shear portion such that relative displacement of the two handles towards or away from each other effects corresponding displacement of the two operative shear portions towards or away from each other respectively, wherein one of the shear portions comprises a powered cutting element and the other shear portion comprises a vegetation restraining means for restraining vegetation inserted between the pair of operative shear portions from displacement when the vegetation is engaged by the cutting element.

Several preferred embodiments of the present invention will now be described, by way of example only, and with reference to the accompanying drawings of which:
Figure 1 shows a side view of an embodiment of the invention with the jaws of a pair of jaws in the "closed" position;
Figure 1a is a schematic inverted view of the jaws of the embodiment of Figure 1 showing in ghosting the internal working mechanism thereof; and
Figure 1b is a cross sectional view of one of the jaws of the embodiment of Figure 1 a along the lines I-I; and
Figure 1c is an opposed side view of the embodiment of Figure 1; and
Figure 2 shows the side view of Figure 1 but with the jaws of the pair of jaws in the "open" position; and
Figure 3 is a front perspective view of the embodiment of Figure 1 with the jaws in an open position; and
Figure 4 shows a side view of the embodiment of Figure 1 with a representative vegetation sample having been partially cut; and
Figure 5 shows the continued cutting of the vegetation from Figure 4 but at a more advanced stage; and
Figure 6 illustrates schematically the internal mechanism of the apparatus of Figure 2 taken along the sectional line X-X; and
Figure 7 shows a sectional view through part of the chain cutting element; and
Figure 8 is a side view of a second embodiment of the invention with the jaws of a pair of jaws in the "partially closed" position; and
Figure 8a is a cross sectional view of the pair of jaws of the embodiment of Figure 8 along the lines VIII-VIII; and
Figure 9 shows a side view of a third embodiment of the present invention with the jaws of a pair of jaws in the "closed" position; and
Figure 9a is a schematic illustration of the jaw members of the embodiment of Figure 9 in an open position; and
Figure 10 is an enlarged cross sectional view of an alternative embodiment of the present invention illustrating an improved self adjusting blade tensioning device; and
Figure 11 is a perspective view from one side of the self adjusting blade tensioning device of Figure 10; and
Figure 12 is a front view of the self adjusting blade tensioning device of Figure 11.

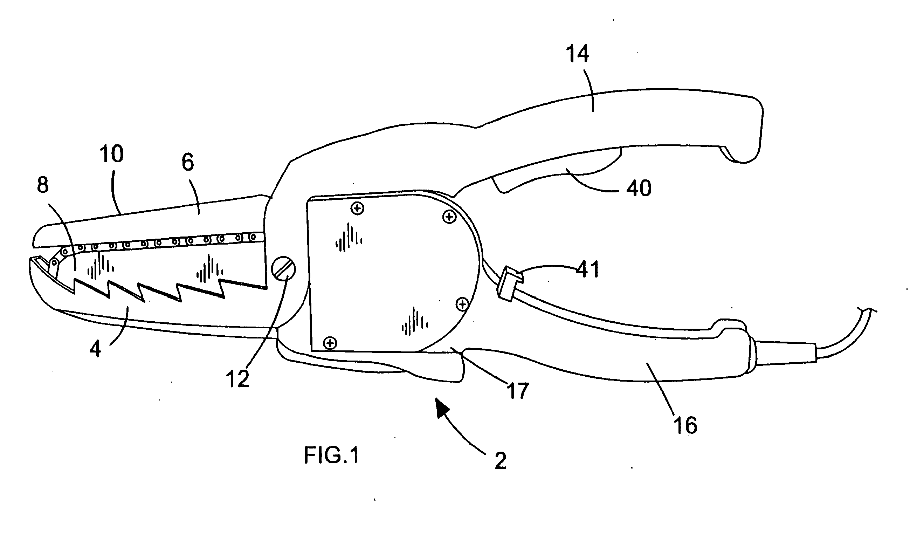

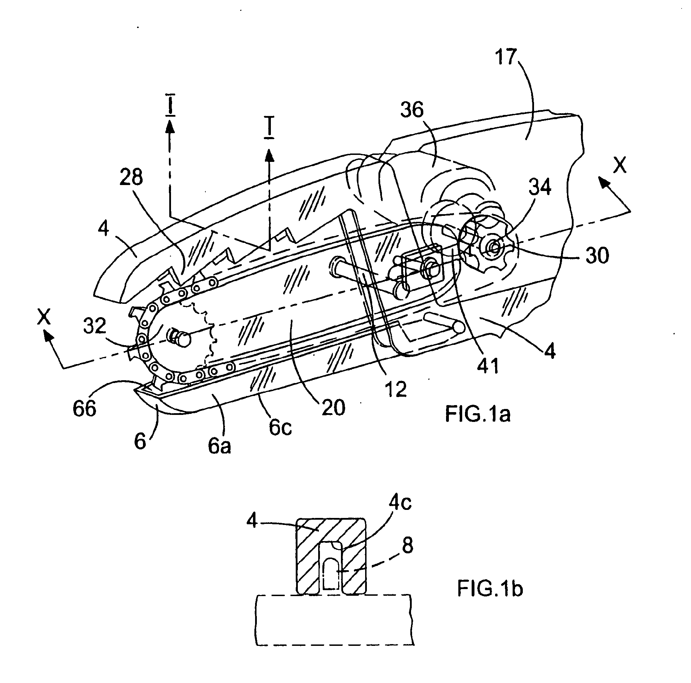

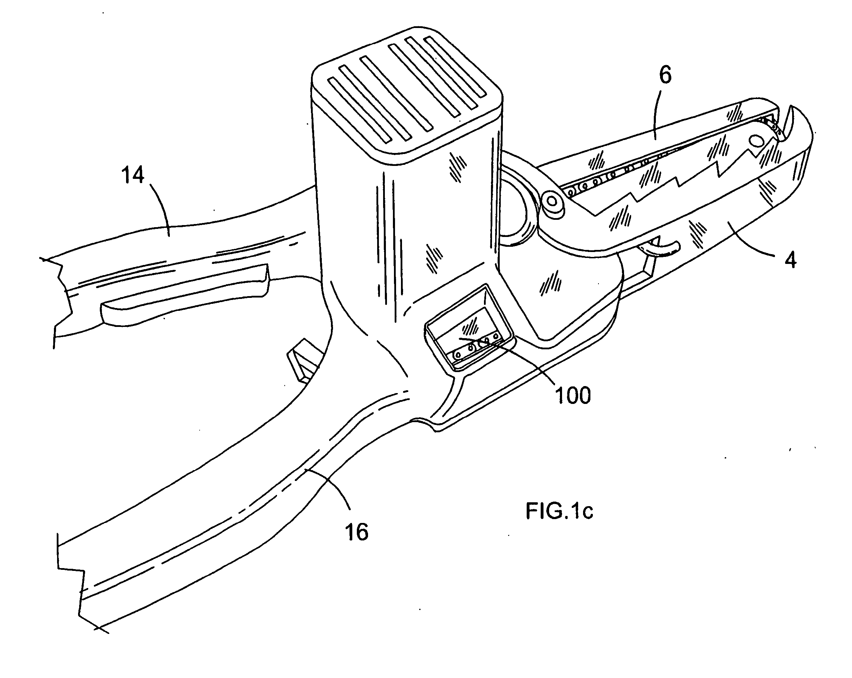

Referring particularly to figure 1 of the drawings it can be seen that a vegetation pruning device shown generally as 2 is arranged in a shear arrangement. Most gardeners and DIY tool users will be familiar with the well-known conventional pair of shears. Essentially a pair of shears is a large pair of scissors used for pruning "light" vegetation such as grass, hedges or bushes or the like. In the example given herein, the term "shears" is used to so as to describe an arrangement of a pair of arms pivotally coupled to one another so as to act as a pair of shears; that is, not limited to the arms being simply sharpened blades. The term "shears" is used to describe the manner in which the arms are opened and closed so as to effect cutting of vegetation, but not to be limited to the arms simply being solid blades as found in a pair of scissors.

In the example shown in Figure 1, it can be seen that the shear arrangement comprises a pair of pivotally coupled arms 4 and 6. In this example the upper arm 6 of the pair of arms 4, 6 comprise a composite structure formed from a cutting element 8 and an outer portion 10 biased towards the cutting element 8. A pivot point 12, in this embodiment an appropriate through bolt, articulates the first arm 4 of the pair of arms to the second arm 6 of the pair of arms so that the arm 4, 6 can be "open" and "closed" by appropriate relative movement of respective handles 14 and 16 of the arms. In this manner, therefore, the opening and closing of the arms 4, 6 of the shear arrangement is similar to the method of operation for opening and closing the blades of a conventional pair of shears.

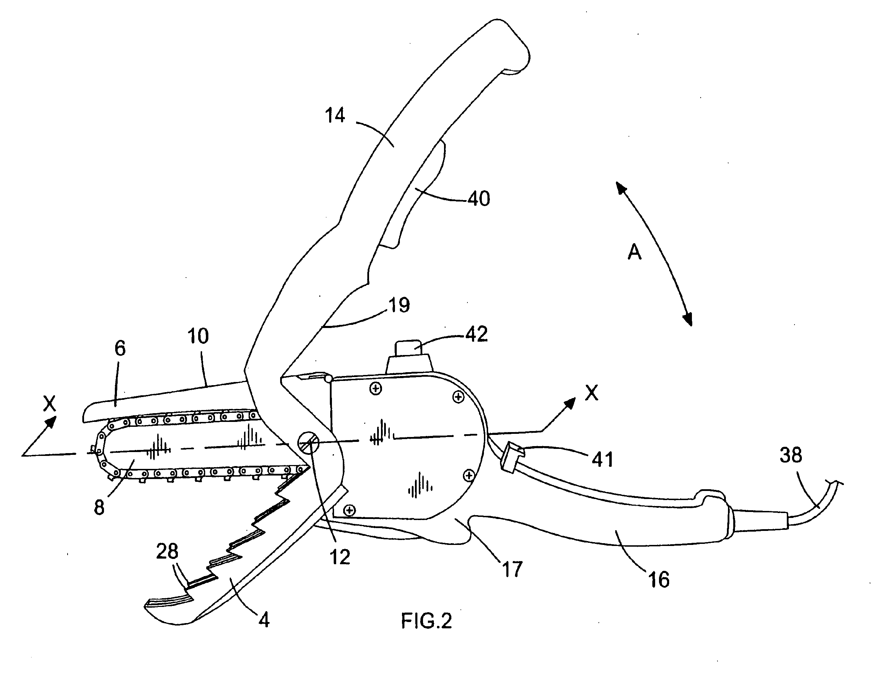

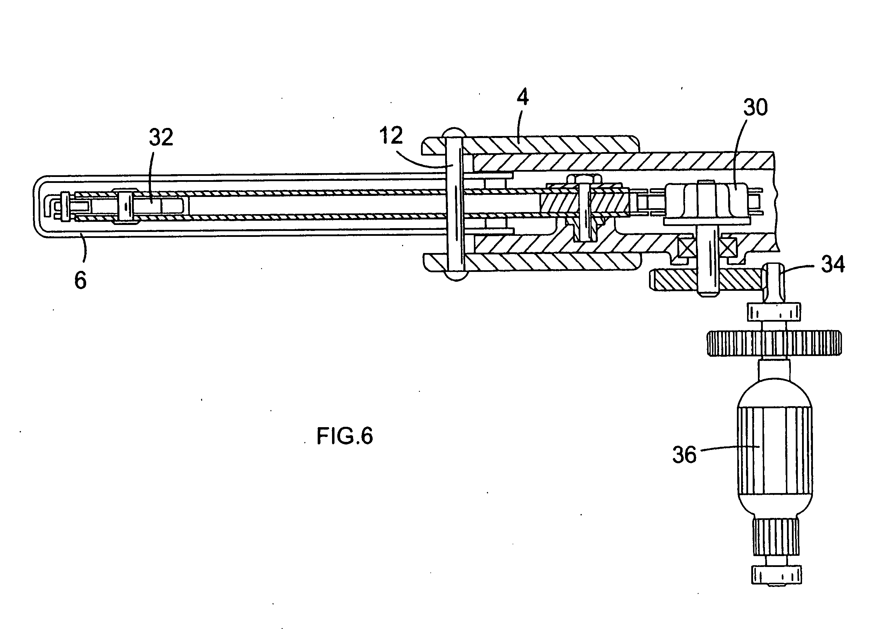

Referring now particularly to figure 2 it can be seen that a user may move the handles 14, 16 apart from one another (as indicated by arrow A) such that the arms 4, 6 also move apart from one another to the "open" position via the pivot point 12. It can be seen from this figure that opening the arms 4, 6 exposes the cutting element 8 such that vegetation for pruning may be introduced into the space between the arm 4 and cutting element 8. The corollary to this, of course, is that in figure 1, where the shear arrangement is shown in the "closed" position, the cutting element 8 is essentially shielded such that it is substantially inaccessible. This will become more understandable from the description below and particularly with reference to Fig 6.

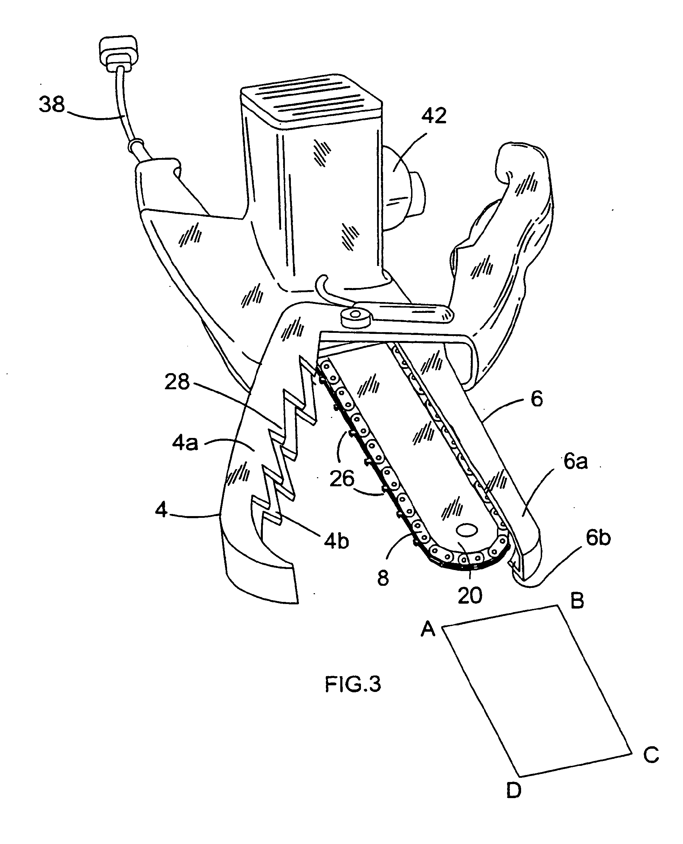

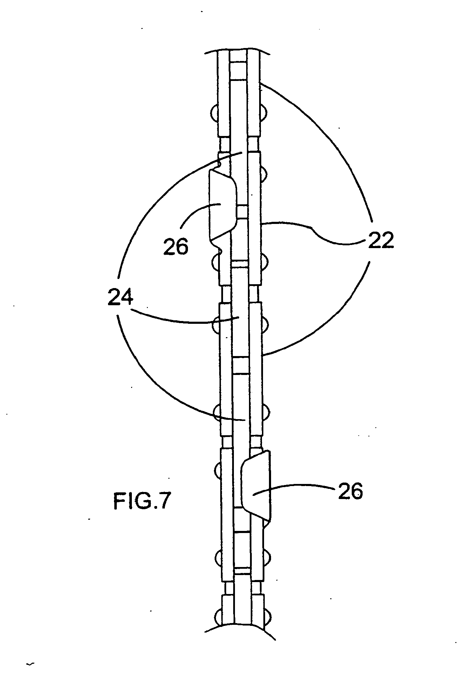

Referring now particularly to figure 3 it can be seen that the cutting element 8, in this example a linked chain, passes over a support member, in this example a longitudinally extending chain bar 20. A longitudinal section taken through the chain 8 is shown in figure 7. It can be seen here that the chain 8 comprises a plurality of links 22 which serve to interconnect sets of pairs of chain elements 24. The construction of the linked chain 8, in this manner, therefore, is conventional. Such a style of chain is used, for example, in chain saws for cutting trees and also on bicycles and motorbikes for providing motive force. Also shown in figure 3, although not essential to the operation of the invention, are a plurality of barbs 26 coupled to the chain 8 used to assist in the cutting operation of the chain 8. It will be apparent to those skilled in the art that a conventional chain saw uses a linked chain with such barbs attached thereto. The purpose of the barbs 26 is to provide the cutting or slicing action of the chain in the vegetation to which it is presented. This chain 8 and chain bar 8 are similar to those employed in a conventional chain saw but, for the purpose of understanding the present invention, simply represent a powered cutting element.

It can also be seen from figure 3 that the chain 8, which is mounted upon and surrounds the chain bar 20, extends within a plane shown as ABCD in the drawing. It can be seen from figure 3 and also Fig 6 that the arm 4, and the outer portion 10 of arm 6 includes side cover portions - respectively 4a, 6a and 4b, 6b - which serve, when the arms 4, 6 are in the "closed" position (in Figure 1), to at least partially encapsulate or surround the chain 8. With reference to Figure 1a it is seen that the cover portion 6 comprises two substantially parallel side plate members (6a and 6b) having a space there between slightly greater than the maximum width of the chain and/or chain bar 20. The outer most edges 6c of each of the plates 6a and 6b are interconnected by a substantially perpendicular outer plate member (not shown) such that this arm portion 6, in cross section, presents a substantially U-shaped profile into which the chain (or powered cutting element) may be at least partially accommodated. The front end of this arm 6 is further curved so as to partially enclose the front end of the curved end of the cutting element as shown in Figure 1a.

With regard to Figures 1a and 1b the proposed arm member 4 is again provided with a substantially U-shaped cross sectional profile (Figure 1b) into which at least part of the chain 8 may be accommodated (as indicated in hashed lines in Figure 1b). Thus in the enclosed configuration, the arm members 4 and 6 of the pair of shears serve to at least partially encompass the powered cutting element (chain 8). Both arms 4 and 6 are provided with curved front end portions to also partially enclose the front curved end of the cutting element.

It can be seen from figure 1, therefore, that when the arms 4, 6 are in a closed position direct access to the chain 8 (and, in particular the barbs 26 attached thereto) is not possible. This provides a significant safety feature for the user of the vegetation pruning device 2 in accordance with the present invention. By providing that each of the cover portions 4a, 4b and 6a, 6b of their respective arms 4, 6 extend in a direction parallel with the plane ABCD, yet each of these extensions are arranged to be laterally offset both from the plane in which the chain 8 rotates and physically from the chain 8 itself, then access to the chain 8 by user from a direction perpendicular to this plane ABCD is not possible when the arms 4, 6 are in a closed position. The arm members 14 and 16 are designed so that when brought into the closed configuration as shown in Figure 1 the handle portion will engage one another to define a limited end stop to the pivoted closed position (Figure 1). In this embodiment, the arm member 16 is provided with a motor housing 17 (to be described below) against which an inner portion 19 of the upper handle 14 (the term inner used to indicate proximate pivot axis 12) which engages with the motor housing 17 to define this end stop position (Figure 1). This defined end stop position causes the side cover portions 4a and 4b of the arm 4 to partially enclose the blade but retain the arm portion 4 in a position whereby its inner face 4c (Figure 1b) is restrained from engaging with the blade 8 as shown. Thus, the arm member 4 whilst able to partially enclose the cutting element is restrained from engagement therewith when in an enclosed configuration. Similarly, and as will be described in more detail below, the upper arm 6 is pivotally biased to the position substantially shown in Figures 1, 1a and 2 so that it will partially enclose the cutting element or chain 8 but has a stop position as shown which prevents it from being displaced into engagement with such cutting element, again allowing the cutting element to be partially enclosed thereby but is restrained from interference with such cutting element operation.

It can be seen from the figures that, in this embodiment, the arm 4 has a plurality of indentations or projections thereon, in this example projecting teeth 28, which are employed in use of the pruning device, to restrain vegetation being cut by the chain 8 in a largely immovable position relative to the arms 4, 6 and the cutting element 8. It will be apparent that in order to effect efficient pruning of vegetation, the vegetation to be pruned needs to be held steady relative to the cutting element so that an accurate cut can be obtained. The purpose of the teeth 28, therefore, is to achieve such function. If desired, the teeth 28 could also be formed on the arms 6 in addition or alternatively to that of the arm 4. Also any suitable shape or profile of such indentations or projections which achieve the holding the vegetation steady relative to the cutting element are equally efficacious. As seen in Figures 1 and 2 the direction of rotation of the chain 8 is indicated by the arrows on the chain bar 20. The specific use of the saw tooth teeth 28 are such that rotation of chain 8 will engage with any workpiece placed between it and the jaws 4 whereby the cutting action will attempt to displace the branch or workpiece in a direction towards the pivot axis 12 which will, in practice, serve to drive such workpiece or branch into positive engagement with the teeth 28 therefore enhancing the gripping effect resultant from use of such teeth 28. If teeth are employed on the arm member 6 then it is preferred such saw teeth will be inclined in an opposite direction to that of arm 4 so as to again cause any workpiece being cut to be forced into positive retaining engagement therewith in a similar manner to employment of the teeth 28.

In order to provide a motive drive force to the chain 8 the proximal end (that is the one remote from the plane ABCD in figure 3) of the chain bar 20 includes a drive wheel or sprocket 30 (shown in Fig 1a and Fig 6 but not visible in the other figures) which engages and drives the chain 8 in a conventional manner.

Also, it will be apparent, that the distal end of the chain bar 20 includes a driven wheel or sprocket 32 (again, shown in Fig 1a and Fig 6 but not visible in the other figures) to allow rotation of the chain 8 around the chain bar 20. The chain 8, when driven by the drive sprocket 30, therefore, rotates in a continuous loop about the external periphery of the chain bar 20. It can be seen from Fig 6 that the drive sprocket 30 is coupled to an output shaft 34 of an electric motor 36. In the example shown the motor 36 provides a direct rotary output for the output shaft 34, although those skilled in the art will appreciate that, dependent upon the conditions of use of the pruning device, a gearbox (not shown) between the motor 36 and the drive sprocket 30 may be useful in order to adjust the amount of torque and/or the rotational speed exhibited by the chain 8 as it is being driven. In this manner, the cutting element operates as a conventional cutting element of a chain saw.

Power for the motor 36 is provided in conventional manner by power supply cable 38 which will be coupled to a source of mains power or the like. (Alternatively, albeit not shown, power could be supplied by a battery or petrol engine). Operation of the motor 36 is dependent upon actuation of a trigger switch 40 by the user of the device 2. The trigger switch 40 is conveniently mounted upon one of the handles, in this example, handle 14. By mounting the trigger 40 on the handle it is easy for the user of the device not only to hold and operate the device, but then also to have a readily available means of activating or deactivating the motor 36. Additionally, it is entirely feasible (although optional) for there to be a secondary operating device mounted upon the other handle 16. This would operate as a "failsafe" mechanism whereby unless both actuators were depressed or activated by the user then the device would be inoperable. This is useful in situations such as those where the user would be in an elevated position up a ladder, or the like, and possibly reaching in order to cut vegetation. It is known that these situations are potentially dangerous and so ensuring that the user must have both hands on the pruning device 2 in order to operate it is desirable. An example of such a secondary failsafe mechanism is illustrated by a secondary displaceable switch member 41 which again is readily accessible via a users fingers when gripping the handle 16. The use of dual switching mechanisms are conventional within many forms of power tools and their specific operation need not be described in any great detail here. However, their operation may be electrical or a combination of electrical mechanical mechanisms. For example operation of the motor will be prevented unless both switch elements 41 are displaced from an unactuated to an actuated position. In this manner the failsafe mechanism may simply comprise an electrical connection to the motor requiring a dual electrical input or may in fact provide some form of mechanical stop mechanism preventing electrical connection between the switch member 41 and the motor. A particular advantage in this invention will be determined that should the users grip on either handle be released then operation of the motor is immediately stopped.

The trigger switch 40 in this embodiment not only controls actuation of the motor 36 but, dependent upon the amount of pressure applied thereto by user, dictates the speed of output of the motor 36. Such switches are readily available in the art.

It will be appreciated from the above that the teeth of both the drive sprocket 30 and the driven sprocket 32 operate to engage the chain 8 in a conventional manner. Clearly the frictional contact which occurs by virtue of this engagement and also the wear of the chain 8 around the periphery of the chain bar 20 may cause a significant amount of heat to be generated. It is therefore advisable for not only some lubrication to be applied to the entire cutting element mechanism including its drive means, but also a mechanism provided for varying the tension felt by the chain 8 if it wears during use.

In order to provide lubrication for the chain 8 and its drive mechanism 30, 32, 34 therefore, there is provided an oil reservoir 42 mounted adjacent the drive sprocket 30 and able to dribble lubricating oil onto the drive sprocket 30 during use of the motor 36. The exact nature of this lubrication mechanism is not germane to the present invention and will therefore not be described in any further detail herein.

The chain tensioning mechanism employed in this specific embodiment is again one conventionally employed in the art of chain saws. The chain bar 20 (as is shown in Figure 1a) is securely mounted to the arm member 16 in the region of the motor housing 17 by an appropriate threaded bolt member (not shown). Such a threaded bolt member will have a first engaging face against which one side of the chain bar 20 is received and a second threaded nut member is then rotatably received on such bolt so as to compress the chain bar 20 therebetween. Operation of this nut or bolt can be achieved in a number of conventional manners but will usually employ an external sprocket member which can be manually rotated as appropriate. In the event that use of the cutting element causes a loosening of the chain (such as by stretching of the distance between adjacent link elements), the chain bar 20 may then slideably displaced about this bolt member in a direction away from the pivot axis (12) of such shear device by firstly loosening the nut member of the nut and bolt restraining mechanism and manually displacing the blade in a direction away from such pivot axis 12 effectively increasing the distance between the sprocket 32 an the sprocket 30 causing the tightening of the chain thereabouts. Once appropriate tightening has been achieved the chain bar 20 is fixed into the new position by appropriate retightening of the nut and bolt member. This chain tension device is conventional for chain saws.

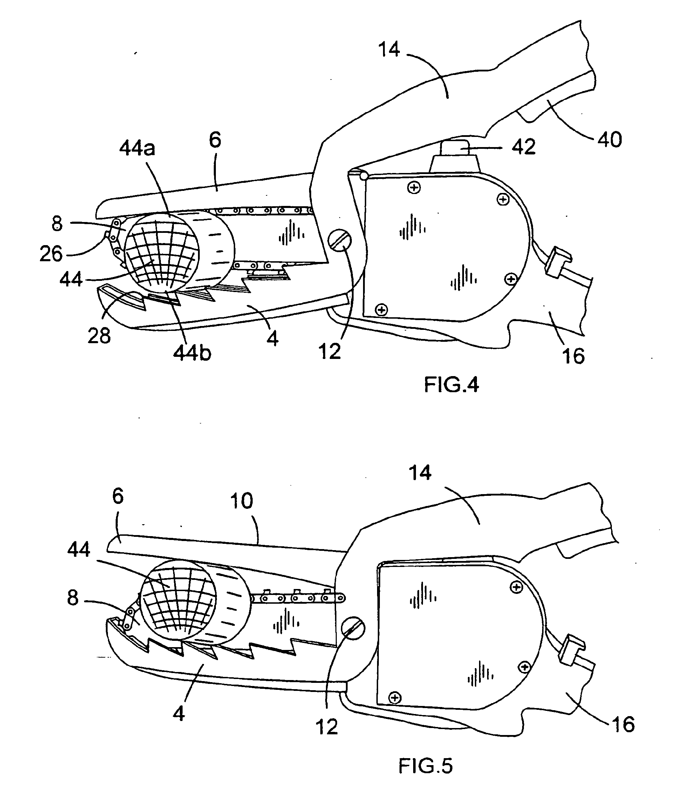

Referring now to figures 4 and 5, in that order, operation of the device 2 will be described. The large cylindrical object 44 in the drawings is representative of vegetation to be pruned and, in this example, is meant to represent a section of a branch or a bush or the like. Assuming firstly that the arms 4, 6 are in the "open" position (Figure 2) and the branch 44 is placed between the lower surface of the chain 8 adjacent the teeth 28 of arm 4, then the user will close the handles 14, 16 of the device to until such times as the branch 44 contacts the lower surface of the chain 8 with its upper portion 44a and the teeth 28 of the arm 4 with its lower portion 446. As the user squeezes the trigger 40, the chain 8 is caused to rotate and the barbs 26 formed thereon will cut into and through the branch 44 in known manner. Whilst this is occurring, the user continues to effect closing of the handles 14, 16 so as to effect a biasing force on the branch 44 into engagement with such cutting element. As the handles 14, 16 move closer together, the force applied thereto acting through the pivot point 12 causes the arms 4 and 6 also to move closer together. In this manner, therefore, the branch 44 is effectively squeezed between the lower arm 4 and the chain 8 and its chain bar 20 causing cutting of the branch 44. The position in Fig 4, therefore, is that of the branch 44 having been cut through about half of its diameter.

Continued force applied to the handles 14, 16 in order to bring them closer together result in the position shown in Fig 5. Here it can be seen that the arm 4 has been brought into its completely closed position such that the side cover portions 4a and 4b of the arm member 4 effectively shields the lower portion of the chain 8 from any contact by the user although the teeth 28 still engage in retaining the branch either side of such cutting element (as shown). It will be noticed, though, that the outer portion 10 of the upper arm 6 has been pivotally displaced from its position as shown in any of the other figures. In this particular embodiment, the upper portion 10 of the upper arm 6 is pivotally connected to such arm members 6 and biased towards an end stop position as shown in Figures 1 and 2 so as to closely abut and partially enclose the cutting element or chain 8. This functions as a chain guard mechanism. However, such a chain guard, if not pivotal, would limit the depth of branches that could be cut to the depth of the chain bar 20. However, by making such outer portion 10 pivotal, then as the branch 44 passes over the chain bar 20 during the cutting operation and as shown in Figure 5, the upper portion 44a will eventually be forced in abutment with this outer portion 10 whereby the continued displacement of the branch past the cutting bar will effect pivotal displacement of the outer portion 10 as shown in Figure 5 allowing the branch to continue to move past the chain 8 and the chain bar 20 in order to effect complete cutting thereof of any branch having a depth greater than that of the chain bar 20. Once the cut branches are then removed from the shears, the spring biasing of this outer portion 10 causes this portion 10 to move back into position shown in Figure 1 effectively providing its function as a chain guard. As mentioned, this chain guard is limited in its pivotal displacement so as not to be brought into engagement with the chain but to partially encompass it as shown in Figure 1a. This provides for a variable cutting depth irrespective of the depth of the chain bar 20.

Having a movable portion of the arm 6 is necessary in this example as the portions 6a, 6b of the arms which sit either side of the chain 8 in the direction perpendicular to the plane ABCD would otherwise simply abut the upper surface of the branch 44 and prevent further closing of the arm 4 toward the chain 8 and chain bar 20. As shown in from Fig 5, the spring providing the spring loading of outer portion 10 of the arm 6 is shown at 46.

Referring now to Figure 1c, showing the proposed side of the shears of Figure 1, the device is provided with an appropriate dust or chip extraction aperture 100. As will be appreciated from Figures 4 and 5, the cutting operation of the chain 8 causes wood chippings and sawdust to be drawn towards the motor housing 17 and sprocket 30. Such movement is further enhanced by the formation of the U-shaped channel formed in arm member 4. As such, a lower portion of the motor housing 17 is provided with an appropriate internal channel and external aperture 100 so that any sawdust or wood chippings drawn into the motor housing are simply extracted so as to fall out of this aperture whereby the speed of rotation of the chain will create an appropriate airflow serving to drive the wood chippings out of the tool.

One of the major benefits of the current invention is the ability to provide a means of rigidly securing the branch or workpiece 44 in close proximity with the blade during the cutting operation. In this particular embodiment a further enhancement provides that the cutting element is partially encompassed so as to prevent inadvertent access thereto providing an enhanced safety feature for the operator. In a further variant (not shown) the invention can be further modified so that operation of the cutting element of the embodiment in Figures 1 to 5 is prevented in the absence of an article to be cut being placed between the cutting element and the jaw 4. This could be achieved by providing an appropriate sensing mechanism registering the presence of a branch between such cutting element 8. An example would be the provision of a further limited pivot action of the lower arm 4 which would be biased to the position conventionally shown in Figures 1 to 5. The degree of pivotal displacement of this arm 4 about this additional pivot point would be limited to only a few degrees whereby when a branch is displaced between this arm 4 and the cutting element 8 and the jaws closed, the resistance of the branch 44 would cause a slight pivotal displacement of the arm 4 against its associated biasing. Detection of this pivotal displacement would then be indicative of the presence of a branch to be cut and an appropriate facility employed within the device to allow operation of the motor on activation of the switches as previously described. Again, such feature could be mechanical or electrical. In the event of an electrical operation, one example would be that when the jaw 4 in its pivotally closed position as shown in Figures 1 to 3, then an appropriate electrical contact activating an appropriate switching element preventing operation of the motor. Once such electrical contact is broken (by the pivotal displacement effected by detection of a branch) operation of the motor can then be initiated. A further enhancement of this type of pivotal detection system will be that once the branch has been completely cut through and falls away from the tool such biasing force on the jaw 4 will be removed causing it to return to its normal position by the inherent resilient biasing causing closure of the aforementioned electrical contact and hence cessation of operation of the motor, stopping the tool. Thus, not only would this permit the tool to be operated only in the presence of a branch but that operation of the tool would automatically cease once that branch had been completely cut through.

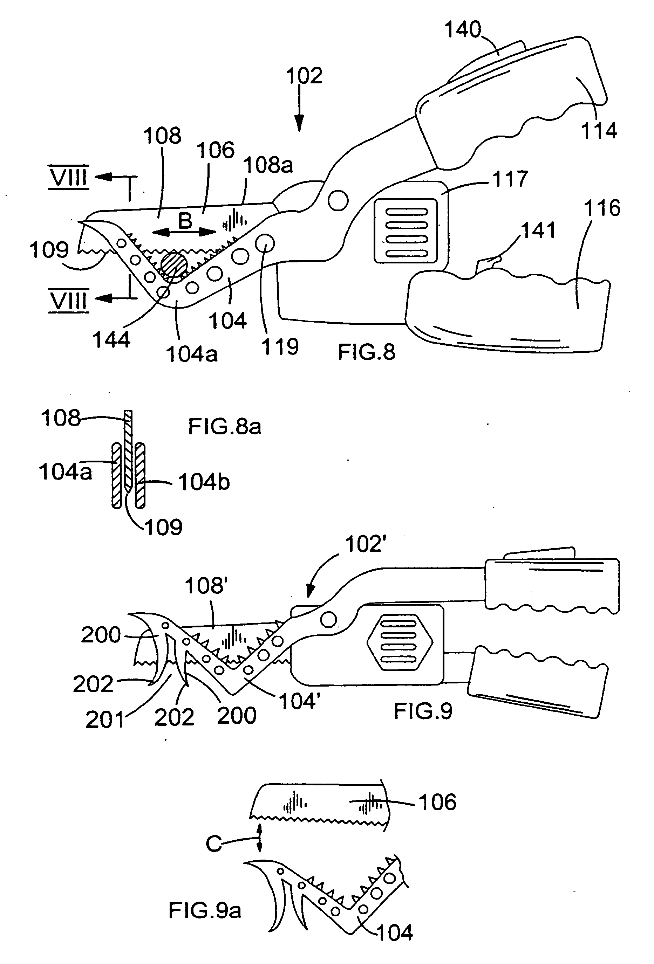

Referring now to Figure 8, an alternative embodiment of the present invention is shown. In this embodiment, like reference numerals used to describe the embodiment in Figures 1 to 7 will be employed but will be distinguished by the prefix " 1 ". Figure 8 shows a vegetation pruning device 102 again comprising a pair of pivotally coupled arms 104 and 106 having respective handles 114 and 116. Again, the handles are provided with an appropriate dual switching mechanism similar to the embodiment shown in Figure 1. However, in the embodiment shown in Figure 8 the cutting element now comprises a linear reciprocating blade 108 having a single linear cutting edge comprising an array of teeth 109. Since an upper portion 108a of such blade is not provided with any cutting elements, there is no need for any pivotal blade guard as shown in the previous embodiment. In this manner, the arm member 106 simply comprises the cutting element 108. The handle 116 again comprises a motor housing 117 and an appropriate reciprocating blade driving mechanism as is conventional within the art causing the blade to move in a linear reciprocating motion as shown by arrow B in Figure 8.

In this embodiment, the opposed arm member 104 comprises a plurality of substantially parallel side cover portion 104a and 104b (as best seen in the cross sectional view of Figure 8a taken along the lines VIII-VIII of Figure 8). Formation of such arm 104 by a plurality of such parallel cover plates ensures that an article to be cut 144 is supported either side of the reciprocating blade 108.

Again, the arm member 104 is provided with a plurality of teeth so as to positively engage and hold the branch or workpiece 144 as it is being cut so as to hold it in a positive engagement against the reciprocating blade 108. In this embodiment the arm member 104 is provided with a substantially V-shaped profile to further enhance the holding operation of branches, which are usually cylindrical. To reduce overall weight of the tool 102, the arm 104 may comprise a plurality of cut-out portions 119 which reduces its weight without inhibiting the overall strength of the device. Again, as will be appreciated the cutting operation will be achieved by firstly opening the jaw members 106 and 108 to allow the branch 144 to be disposed therebetween whereby closure of the handles 114 and 116 will therefore bring the arm members towards one another causing the branch to be deflected to the lower portion or inner apex of the V-shaped groove of arm member 104 and held in abutment with the blade 108, whereby continued compressive force on the handles 114 and 116 caused the branch to be moved against the reciprocating blade 108 on operation of the tool causing it to be cut.

Again, the tool 102 of Figure 8 could be further enhanced by the provision of an automatic shut-off feature so as to stop operation of the tool once cutting of the branch has been completed which could be achieved, in this embodiment, by means of detecting when the handle portion 114 has been moved in a direction towards handle 116 through a certain angular configuration which would ensure that the inner toothed portion of the arm 104 had been displaced past the teeth 109 of the cutting element 108. Once this has been achieved then any branch held between the arm 104 and the blade 108 will have completely past the cutting teeth 109 and thus have been completely cut.

As is seen in Figure 8a and also inferred from Figure 8, the parallel side cover portions 104a and 104b of the arm 104 are not interconnected which permits at least part of the blade 108 to pass completely therethrough. As seen in Figure 8 this is necessary to ensure that the teeth 109 of the blade 108 can fully engage with the branch 144 held in the apex of such V-shaped arm 104.

With reference to Figure 9, the embodiment 102 of Figure 8 is shown with a further enhancement to provide a secondary cutting function. The vegetation pruning device 102' of Figure 9 is substantially identical to that shown in Figure 8 expect that the arm 104' is provided on its lower or outermost edge, two downwardly extending projections 200. A slot 201 is formed between these projections 200. These projections 200 have curved lower portions 202 so as to form a gradually decreasing slot or gullet 201 therebetween. This gullet decreases in size from approximately 20mm down to 5-1 0mm as appropriate and is intended for receiving thinner branches or twigs to permit a secondary operation of the tool 102', Where the user determines thin twigs or branches and does not wish to operate the tool by opening the jaws 104 and 108, such smaller twigs can then be received with the slot 201 and brought into abutment with the reciprocating blade 108' so as to be cut by the blade. The use of the projections 200 restrain the twig received therein from linear displacement during the cutting operation of the reciprocating blade. This permits a secondary function of the tool.

An advantage of this design is that smaller twigs can be cut without necessitating opening of the jaws, whereby the diameter of this slot 201 is limited to alleviate the possibility of fingers being placed therein and brought into engagement with reciprocating blade.

Still further, in a preferred embodiment of the version shown in Figures 8 and 9, the reciprocating blade will normally be between 3.175 and 6.35mm (1/8^{th} and ¼ of an inch) thick so as to provide sufficient rigidity for cutting through branches of up to 30mm in diameter.

Ideally, such blade will be 4.7625mm (3/16^{th} of an inch) thick. A blade of this thickness will then be provided with sufficient rigidity so that any smaller diameter branches less than 10mm disposed between the arm 104 and 108 as shown in Figure 8 can then be cut by conventional shearing operation by manual displacement of the handles 114 and 116 towards one another, whereby the strength of the blade 108 and the sharpness effected by the teeth 109 will be sufficient to shear through such branches without the need of activating a reciprocating motion of the blade. Thus, this provides a tool that has a plurality of functions ie. both powered cutting of a branch or simple shearing of that branch as appropriate.

With reference to Figure 9a an advantage of the use of the substantially V-shaped arm member 104 is shown as this will limit the maximum aperture between the arm members 104 and 106 to a distance represented by arrow C which allows a predefined maximum diameter of branch to be received within this particular tool 102. In this embodiment, the space in C is limited to up to 40mm although preferably is limited to 30mm.

Although in the example shown in figures 1 to 5 the cutting element 8 and the outer portion 10 of the arm 6 biased towards the cutting element 8 together comprise one arm 6 of the pair of arms 4, 6, it will be appreciated that these may be formed as separate elements. For example, it could equally be the case that whilst one arm 4 of the pair of arms is a shown in the drawings, the other arm could actually comprise the chain bar 20 and its associated chain 8. In this example, therefore, the feature which is labelled 10 in the diagrams would not actually formed part of the other arm of the pair but would be a pivoting spring biased portion formed as a separate element. This distinction is not germane to the present invention, however.

It will be understood by those skilled in the art that the sense of rotation of the chain 8 about its chain bar 20 determines the orientation of the teeth 28. Also this sense of rotation will determine between which arm 4 or 6 as shown in the drawings and the chain 8 the branch 44 to be cut is presented. Clearly it is not useful for the chain to rotate in the sense which causes the branch 44 to be pushed away from the pruning device but rather pulled in towards the pruning device 2 and, even then, to be engaged in as non-movable a manner as possible by the teeth 28.

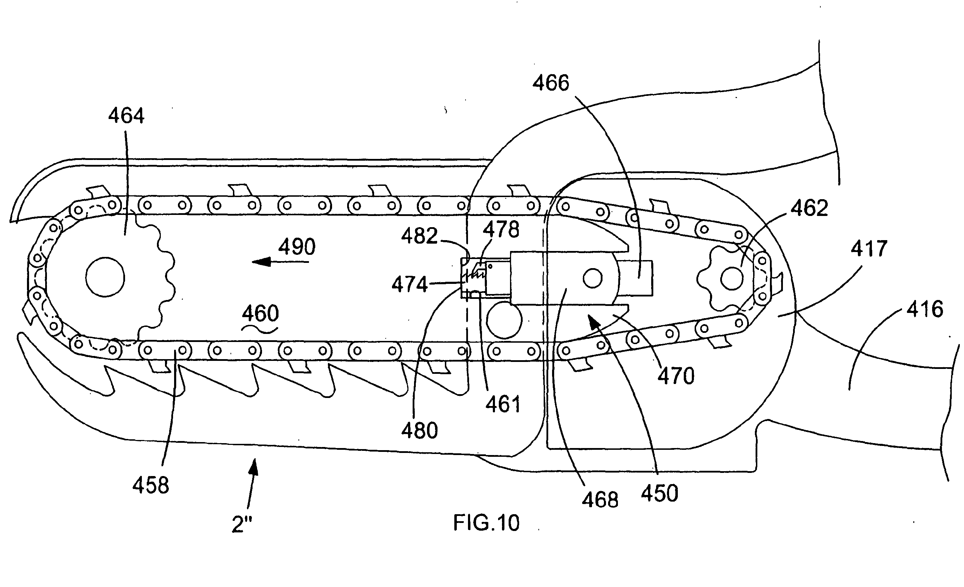

In a further enhancement of the present invention, now shown in Figures 10 through 12, there is provided a self-adjusting blade or chain tensioning device to replace the manually adjustable chain tensioning device shown with reference to Figure 1a.

Referring now to Figure 10 there is a shown an alternative shear arrangement device 2" (identical to shears 2 of Figure 1 with the exception of this chain tensioning device) having such a modified blade tensioning device shown generally by arrows 450. As discussed above, where the cutting element comprises a chain 458 mounted on an appropriate support member (or chain bar) 460 for such chain 458 to extend between a first driven wheel or sprocket member 462 and a driven (or sprocket) wheel member 464 then use of the cutting chain 458 will incur considerable vibration, often effecting displacement of the support member 460 thus causing the chain to loosen. It is necessary that the support member 460 is adjustable so as to allow the chain to be retensioned as appropriate.

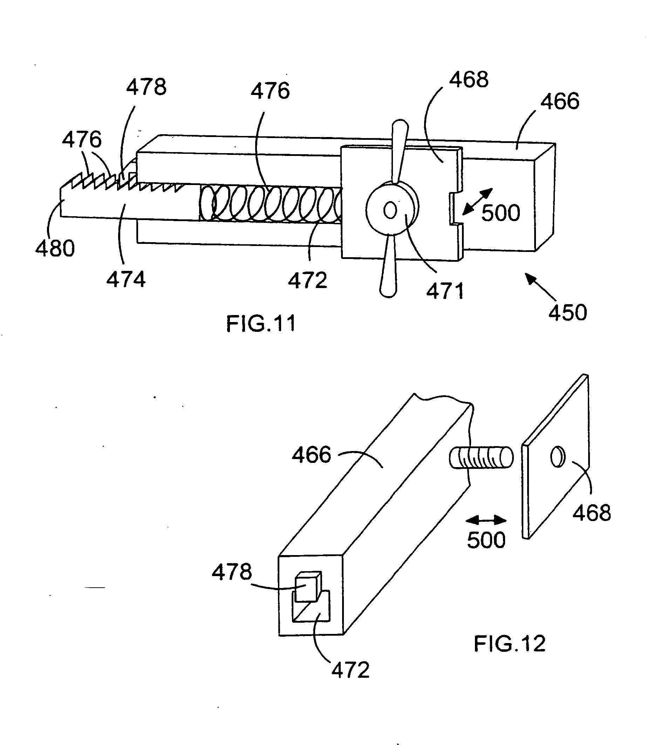

Referring now to Figure 11 the self-adjusting device 450 is shown in more detail.

This device 450 comprises a primary mounting block 466 securely mounted to the motor housing 417 and hence handle portion 416 so as to be effectively integral therewith. Adjustably mounted on this mounting block 466 is a steel compression plate 468 which is adjustable relative to and away from the mounting member 466 (as indicated by arrow 500) so as to effectively compress or release an internal end portion 470 of the support member 460, as schematically illustrated in Figure 10. Here it can be seen that the inner portion 470 of the support member 460 has a substantially rectangular rebate 461 allowing it to pass over an appropriate screw threaded member (not shown) upon which the compression plate 468 is mounted whereby a conventional wing nut (471) or other rotatable member (eg. a rotatable knob) can then be used to adjust the compression plate towards or away from the mounting member 466 so as to compress and hold, or alternatively, release the support member 460 disposed between such plate 468 and block 466. Accordingly, this compression plate 468 is a greater size than rebate 461 to allow positive engagement of the plate 468 with the support member 460. The device 450 is further provided with an internal elongate channel 472 slideably accommodating a plunger 474 which is spring loaded via an appropriate coil spring 476 disposed between an internal end of the channel 472 and the plunger 474 as shown. The channel 472 is substantially square in cross section so as to retain the plunger in a desired displaceable orientation relative to the support member 460 as will be described below. The plunger is further provided with a series of ratchet teeth 476 inclined in a direction away from the mounting block 466 as shown. An appropriate non-return ratchet pawl 478 is then rigidly connect to the mounting member 466 so as to engage with the ratchet teeth 476 to prevent a return of the ratchet member 476 back into the mounting member 466 once displaced there out of by the spring member 476. In practice, this non-return ratchet pawl will be provided with an appropriate adjustment means which allows it to be displaced out of engagement with the ratchet teeth when the self-adjusting device is to be released to allow removal of the chain and necessary reduction in tension thereof to allow such removal.

In practice, the support member 460 and the self-adjusting device 450 will be constructed as shown in Figure 10 with a outer end surface 480 of the plunger 474 in abutment with an internal surface 482 of the rebate 461 of the support member 460 as shown in Figure 10. When the compression plate 468 is in a released position, disposed away from the block 466, the support member 460 is no longer frictionally restrained against the mounting block 466, whereby the inherent resilient biasing of the coil spring 476 (which is set at between 5lbs and 10lbs pressure in a normal embodiment but could be anywhere between 5lb and 30lbs of pressure) exerts a biasing force on the plunger 480 which is exerted against the internal surface 482 of rebate 461 so as to effect adjustment of the support member away from the support blocking a direction as shown by arrow 490 in Figure 10. The amount of displacement effected on the support member 460 by such biasing force is limited by the size of the chain member 458 but in this released configuration the self-adjusting device 450 serves to apply sufficient force to the support member 460 to effect appropriate tensioning to the chain 458 as required. The compression plate 468 can then be adjusted so as to clamp the support member 460 against the mounting member 466 to hold it in the self-adjusted, tensioned configuration. In practice the non-return ratchet pawl 478 will assist in maintaining the plunger in this appropriate position. In the event that there is subsequent loosening of the chain which requires the device to be re-tensioned, this is simply achieved by again releasing the compression plate 468 by adjustment of the appropriate rotatable release mechanism (wing-nut 471) whereby the biasing force of the coil spring 476 then effects sufficient displacement of the support member 460 to automatically re-tension the chain. This re-tensioned chain can then be clamped in position by retightening of the wing nut 471 compression plate 468 as previously described.

In the event that a user wishes to remove or replace the chain member 458 this is simply achieved by releasing the non-return ratchet pawl and applying sufficient force to the free-end of the support member 460 to overcome the biasing force of the spring 476 to effect sufficient displacement of the support member 460 towards the drive wheel 462 to allow the chain to be removed from such support member 460.

However, this specific embodiment provides an enhanced and simplified means of self-adjusting tensioning of a chain about a support member which simply allows loosening of the appropriate wing-nut on the compression plate 468 to effect appropriate self-adjustment of the chain tension.

Basically, this self adjusting blade tensioning device 450 effects relative displacement between the two support wheels 464 and 462 as shown. This is achieved by mounting the driveable support wheel 464 on the support member 460 and securing the tensioning device 450 so as to be immovably displaced relative to the driven support wheel 462.

It is to be appreciated that this specific feature of self-adjusting blade tensioning device is not limited to use with a shear arrangement of the embodiments of Figures 1 to 7 but is equally applicable to any device utilising a rotatable chain where a minimum tensioning of the chain is required to be maintained and regularly adjusted, for example, conventional chainsaws or even bicycles. In addition, whilst the use of a wheel-nut is envisaged being mounted on a conventional screw threaded member to effect adjustment of the compression plate 468, alternative means of adjustment of this compression plate 468 to and away from the mounting block 466 is readily envisaged and could simply be a conventional nut mounted on a screw threaded member or even a hydraulic compression arrangement.

## Claims

1. A vegetation pruning device (2) including:
a shear arrangement comprising a pair of pivotally coupled arms (4, 6);
a motor (36) with a rotary output drive (34); a cutting element (8) coupled to the rotary output drive (34) and arranged for cutting
vegetation (44) presented thereto;
**characterized in that**:
the cutting element (8) is mounted upon a support member (20) and arranged for rotation thereabout under the influence of the rotary output drive (34).

2. A vegetation pruning device according to claim 1 wherein said motor (36) and cutting element (8) are operatively associated with one of said pair of pivotally coupled arms (4, 6).

3. A vegetation pruning device according to either of the preceding claims wherein the cutting element (8), when the shear arrangement is closed, is substantially inaccessible.

4. A vegetation pruning device according to any one of the preceding claims wherein one (6) of said pair of arms (4, 6) comprises said cutting element (8).

5. A vegetation pruning device according to claim 4 wherein the other (4) of said pair of arms (4, 6) comprises a vegetation restraining means (28) for restraining vegetation (44) inserted between said pair of arms from displacement when engaged with said cutting element (8).

6. A vegetation pruning device according to claim 5 wherein said vegetation restraining means (28) comprises a series of indentations and or projections disposed towards said cutting element (8) to provide points of restraint or retention of said vegetation thereagainst.

7. A vegetation pruning device as according to claim 6 wherein said series of projections comprises a plurality of teeth inclined and facing towards said cutting element (8).

8. A vegetation pruning device according to any one of claims 5 to 7 wherein said other (4) of said pair on arms (4, 6) comprises a parallel pair of side walls (4a, 4b) defining a channel therebetween for at least partially receiving said cutting element (8) as the cutting element is pivotally displaced towards said other (4) of said pair of arms.

9. A vegetation pruning device according to claim 8 comprising a stop member (42) to limit pivotal displacement of said arm members towards one another for restraining said cutting element (8) at a predetermined pivotal position relative to said other (4) of said pair of arms so as to remain received within said channel.

10. A vegetation pruning device according to claim 8 or claim 9 wherein said channel comprises an inner surface (4c) extending between said parallel side walls (4a, 4b) defining a dust/debris conveying path communicating with a dust/debris extraction aperture.

11. A vegetation pruning device as claimed in claim 8 wherein said parallel pair of side walls (4a, 4b) are profiled to allow at least part of said cutting element (8) to pass completely through said channel as said cutting element is pivotally displaced towards said other (4) of said pair of arms.

12. A vegetation pruning device as claimed in claim 11 wherein said side walls have a V-shaped profile for receiving and supporting in an inner apex thereof vegetation to be cut.

13. A vegetation pruning device according to any one of the preceding claims wherein one or both of the pair of arms (4, 6) includes a cover portion resiliently biased towards the cutting element and movable away therefrom under application of force.

14. A vegetation pruning device according to claim 13 when appended to claim 4 wherein said one (6) of said pair of arms (4, 6) comprising the cutting element (8) further comprises a cover portion biased towards the cutting element.

15. A vegetation pruning device according to claim 14 wherein said cover portion comprises a vegetation restraining means (28) having a series of indentations and or projections disposed towards said cutting element (8) to provide points of restraint or retention of said vegetation (44) thereagainst.

16. A vegetation pruning device according to claim 14 or claim 15 wherein said biased cover portion is associated with said cutting element (8) so as to be displaceable away from said cutting element by said vegetation (44) through which said cutting element has cut.

17. A vegetation pruning device according to any one of the preceding claims wherein vegetation (44) to be pruned is clamped between one of the arms (4) of the shear arrangement and the cutting element (8) by pivotal operation of said arms.

18. A vegetation pruning device according to any one of the preceding claims wherein the motor rotary output drive (34) includes a toothed drive wheel (30).

19. A vegetation pruning device according to claim 18 wherein the support member (20) includes a driven (32, 464) and a drive wheel (30,462) around which the cutting element (8, 458) moves as the drive wheel rotates.

20. A vegetation pruning device according to either claim 18 or claim 19 wherein the cutting element (8) rotates within a first plane (A, B, C, D) and the arms of the pair of arms (4, 6) each include a surface which extends either side of this first plane.

21. A vegetation pruning device according to anyone of the preceding claims wherein the cutting element (8) comprises a chain (458).

22. A vegetation pruning device according to claim 21 when appended to claim 17 wherein the teeth of the toothed wheel (462) fit between the links (22) of the chain (458) thereby to provide motive force to the chain.

23. A vegetation pruning device according to claim 21 or claim 22 wherein the chain (458) further includes a plurality of barbs (26) to assist in vegetation pruning.

24. A vegetation pruning device according to any one of claims 1 to 17 wherein said cutting element (8) comprises a linear reciprocating blade (108).

25. A vegetation pruning device according to claim 24 when appended to claim 17 further comprising a rotary to linear converter mechanism to facilitate linear reciprocating motion of said blade (108) from the rotary output of said motor (36).

26. A vegetation pruning device according to any one of the preceding claims Including an actuator (40) for controlling operation of the motor (36).

27. A vegetation pruning device according to claim 26 wherein the actuator (40) is a variable speed-controller for governing the output speed of the motor (36).

28. A vegetation pruning device according to claim 26 or claim 27 wherein said actuator (40) comprises at least one resiliently biased switch member mounted on each of the two arm members, wherein said actuator is restrained from operating said motor unless both of at least one switch members are operated.

29. A vegetation pruning device as claimed in claim 18 or any one of claims 19 to 28 when appended to claim 18 comprising a self adjusting tensioning device (450) to allow automatic adjustment of the support member (20).

30. A vegetation pruning device according to claim 29 when appended to claim 21 wherein adjustment of said support member (20) effects tensioning of said cutting element (8).

31. A vegetation pruning device as claimed in claim 29 or 30 wherein said self adjusting tensioning device (450) comprises adjustable restraint means (468) for releasably securing said support member relative to said pruning device together with a rigid support block (466) rigidly secured to one of said pair of pivotally coupled arms on which said support member is mounted, said block having a resiliently biased adjustment member (480) disposed between said support block and said support member to exert a displacement force on said support member (20) away (490) from said support block when said restraint member is in a released position.

32. A vegetation pruning device as claimed in claim 31 wherein said biasing member comprises a spring biased plunger (474) having a first ratchet member (476) and said support block (466) having a second ratchet member (478) whereby engagement between said first and second ratchet members prevents displacement of said plunger towards said support block.

33. Powered vegetation pruning shears (2) comprising a pair of arms (4, 6), each arm comprising a handle portion and an operative shear portion, which arms being pivotally connected about a pivot axis disposed between the handle and operative shear portions such that relative displacement of the two handles towards or away from each other effects corresponding displacement of the two operative shear portions towards or away from one another respectively,
**characterized in that**
one (6) of said shear portions comprises a powered cutting element (8) and the other (4) shear portion comprises a vegetation restraining means (28) for restraining vegetation inserted between said pair of operative shear portions from displacement when said vegetation (44) is engaged by said cutting element (8).

## Patentansprüche

1. Vegetationsausästungsvorrichtung (2), umfassend:
eine Scherenanordnung mit einem Paar schwenkbar verbundener Arme (4, 6),
einem Motor (36) mit einem Drehausgangsantrieb (34),
einem Schneidelement (8), das mit dem Drehausgangsantrieb (34) verbunden und angeordnet ist, um dahin zugeführte Vegetation (44) zu schneiden,
**dadurch gekennzeichnet, dass**
das Schneidelement (8) an einem Halteelement (20) angebracht und für eine Drehung dazu unter dem Einfluss des Drehausgangsantriebs (34) angeordnet ist.

2. Vegetationsausästungsvorrichtung nach Anspruch 1, wobei der Motor (36) und das Schneidelement (8) betriebsmäßig mit einem aus dem Paar der schwenkbar verbundenen Arme (4, 6) verbunden ist.

3. Vegetationsausästungsvorrichtung nach einem der vorhergehenden Ansprüche, wobei auf das Schneidelement (8) im Wesentlichen nicht zugegriffen werden kann, wenn die Scherenanordnung geschlossen ist.

4. Vegetationsausästungsvorrichtung nach einem der vorhergehenden Ansprüche, wobei einer (6) aus dem Paar von Armen (4, 6) das Schneidelement (8) aufweist.

5. Vegetationsausästungsvorrichtung nach Anspruch 4, wobei der andere (5) aus dem Paar von Armen (4, 6) ein Vegetationshaltemittel (28) aufweist, um Vegetation (44), die zwischen dem Paar von Armen eingesetzt ist, gegen eine Verlagerung zu halten, wenn sie mit dem Schneidelement (8) in Eingriff ist.

6. Vegetationsausästungsvorrichtung nach Anspruch 5, wobei das Vegetationshaltemittel (28) eine Reihe von Vertiefungen und/oder Vorsprüngen umfasst, die in Richtung des Schneidelements (8) angeordnet sind, um Halte- oder Fixierpunkte für die Vegetation dagegen vorzusehen.

7. Vegetationsausästungsvorrichtung nach Anspruch 6, wobei die Reihe von Vorsprüngen eine Vielzahl von Zähnen umfasst, die zu dem Schneidelement (8) geneigt sind und zu diesem weisen.

8. Vegetationsausästungsvorrichtung nach einem der Ansprüche 5 bis 7, wobei der andere (4) aus dem Paar von Armen (4, 6) ein paralleles Paar von Seitenwänden (4a, 4b) aufweist, die einen Kanal dazwischen zur zumindest teilweisen Aufnahme des Schneidelements (8) bilden, wenn das Schneidelement schwenkend zu dem anderen (4) aus dem Paar von Armen verlagert wird.

9. Vegetationsausästungsvorrichtung nach Anspruch 8 mit einem Anschlagelement (42) zum Begrenzen der Schwenkverlagerung der Armelemente aufeinander zu, um das Schneidelement (8) in einer vorgegebenen Schwenkstellung relativ zu dem anderen (4) aus dem Paar von Armen zu halten, um es in dem Kanal aufgenommen zu halten.

10. Vegetationsausästungsvorrichtung nach Anspruch 8 oder 9, wobei der Kanal eine innere Oberfläche (4c) umfasst, die sich zwischen den parallelen Seitenwänden (4a, 4b) erstreckt, so dass ein Staub/Schmutz-Transportweg gebildet wird, der in Verbindung mit einer Staub/Schmutz-Extraktionsöffnung steht.

11. Vegetationsausästungsvorrichtung nach Anspruch 8, wobei das parallele Paar von Seitenwänden (4a, 4b) profiliert ist, um zumindest einem Teil des Schneidelements (8) zu erlauben, vollständig durch den Kanal zu laufen, wenn das Schneidelement schwenkend zu dem anderen (4) aus dem Paar von Armen verlagert wird.

12. Vegetationsausästungsvorrichtung nach Anspruch 11, wobei die Seitenwände ein V-förmiges Profil haben, um zu schneidende Vegetation in einer inneren Spitze davon aufzunehmen und zu stützen.

13. Vegetationsausästungsvorrichtung nach einem der vorhergehenden Ansprüche, wobei einer oder beide aus dem Paar von Armen (4, 6) einen elastisch zu dem Schneidelement vorgespannten und unter Anwendung einer Kraft davon weg bewegbaren Abdeckabschnitt umfasst.

14. Vegetationsausästungsvorrichtung nach Anspruch 13, sofern abhängig von Anspruch 4, wobei der eine (6) aus dem Paar von Armen (4, 6), der das Schneidelement (8) umfasst, ferner einen Abdeckabschnitt umfasst, der zu dem Schneidelement vorgespannt ist.

15. Vegetationsausästungsvorrichtung nach Anspruch 14, wobei der Abdeckabschnitt ein Vegetationshaltemittel (28) mit einer Reihe von Vertiefungen und/oder Vorsprüngen umfasst, die zu dem Schneidelement (8) hin angeordnet sind, um Halte- oder Fixierpunkte für die Vegetation (44) dagegen vorzusehen.

16. Vegetationsausästungsvorrichtung nach Anspruch 14 oder 15, wobei der vorgespannte Abdeckabschnitt mit dem Schneidelement (8) verbunden ist, um durch die Vegetation (44), durch die das Schneidelement geschnitten hat, weg von dem Schneidelement verlagert werden zu können.

17. Vegetationsausästungsvorrichtung nach einem der vorhergehenden Ansprüche, wobei Vegetation (44), die ausgeästet werden soll, zwischen einem der Arme (4) der Scherenanordnung und dem Schneidelement (8) durch schwenkende Betätigung der Arme eingeklemmt wird.

18. Vegetationsausästungsvorrichtung nach einem der vorhergehenden Ansprüche, wobei der Drehausgangsantrieb (34) des Motors ein mit Zähnen versehenes Antriebsrad (30) umfasst.

19. Vegetationsausästungsvorrichtung nach Anspruch 18, wobei das Halteelement (20) ein angetriebenes (32, 464) und ein antreibendes Rad (30, 462) umfasst, um die sich das Schneidelement (8, 458) bewegt, wenn das antreibende Rad rotiert.

20. Vegetationsausästungsvorrichtung nach Anspruch 18 oder 19, wobei das Schneidelement (8) in einer ersten Ebene (A, B, C, D) rotiert und die Arme des Paars von Armen (4, 6) jeweils eine Fläche einschließen, die sich auf beiden Seiten dieser ersten Ebene erstrecken.

21. Vegetationsausästungsvorrichtung nach einem der vorhergehenden Ansprüche, wobei das Schneidelement (8) eine Kette (458) umfasst.

22. Vegetationsausästungsvorrichtung nach Anspruch 21, sofern abhängig von Anspruch 17, wobei die Zähne des mit Zähnen versehenen Rads (462) zwischen die Verbindungen (22) der Kette (458) passen, um eine Bewegungskraft für die Kette vorzusehen.

23. Vegetationsausästungsvorrichtung nach Anspruch 21 oder 22, wobei die Kette (458) ferner eine Vielzahl von Widerhaken (26) umfasst, um eine Vegetationsausästung zu unterstützen.

24. Vegetationsausästungsvorrichtung nach einem der Ansprüche 1 bis 17, wobei das Schneidelement (8) ein sich linear hin- und herbewegendes Blatt (108) umfasst.

25. Vegetationsausästungsvorrichtung nach Anspruch 24, sofern abhängig von Anspruch 17, ferner mit einem Konvertiermechanismus von einer Drehbewegung zu einer Linearbewegung, um eine linear hin- und hergehende Bewegung des Blatts (108) gegenüber dem Drehausgang des Motors (36) zu ermöglichen.

26. Vegetationsausästungsvorrichtung nach einem der vorhergehenden Ansprüche, umfassend ein Betätigungselement (40) zum Steuern des Betriebs des Motors (36).

27. Vegetationsausästungsvorrichtung nach Anspruch 26, wobei das Betätigungselement (40) eine Steuerung zur Veränderung der Geschwindigkeit ist, um die Ausgangsgeschwindigkeit des Motors (36) zu regeln.

28. Vegetationsausästungsvorrichtung nach Anspruch 26 oder 27, wobei das Betätigungselement (40) zumindest ein an jedem der zwei Armelemente angebrachtes, elastisch vorgespanntes Schaltelement umfasst, wobei das Betätigungselement an einer Betätigung des Motors gehindert wird, wenn nicht beide der jeweils wenigstens einen Schaltelemente betätigt werden.

29. Vegetationsausästungsvorrichtung nach Anspruch 18 oder einem der Ansprüche 19 bis 28, sofern abhängig von Anspruch 18, mit einer sich selbst einstellenden Spannvorrichtung (450), um eine automatische Einstellung des Halteelements (20) zu ermöglichen.

30. Vegetationsausästungsvorrichtung nach Anspruch 29, sofern abhängig von Anspruch 21, wobei ein Einstellen des Halteelements (20) ein Spannen des Schneidelements (8) bewirkt.

31. Vegetationsausästungsvorrichtung nach Anspruch 29 oder 30, wobei die sich selbst einstellende Spannvorrichtung (450) einstellbare Haltemittel (468) zum lösbaren Befestigen des Halteelements relativ zu der Ausästungsvorrichtung zusammen mit einem festen Stützblock (466) umfasst, der fest mit einem aus dem Paar von schwenkbar verbundenen Armen verbunden ist, an dem das Halteelement angebracht ist, wobei der Block ein elastisch vorgespanntes Einstellelement (480) aufweist, das zwischen dem Stützblock und dem Halteelement angeordnet ist, um eine Verlagerungskraft auf das Halteelement (20) weg (490) von dem Stützblock auszuüben, wenn das Halteelement in einer freigegebenen Stellung ist.

32. Vegetationsausästungsvorrichtung nach Anspruch 31, wobei das Vorspannelement einen federvorgespannten Kolben (474) mit einem ersten Ratschenelement (476) umfasst und der Stützblock (466) ein zweites Ratschenelement (478) aufweist, wobei ein Eingriff zwischen dem ersten und dem zweiten Ratschenelement eine Verlagerung des Kolbens zu dem Stützblock verhindert.

33. Angetriebene Vegetationsausästungsschere (2) mit einem Paar von Armen (4, 6), wobei jeder Arm einen Griffabschnitt und einen Arbeitsscherenabschnitt umfasst, wobei die Arme schwenkbar um eine Schwenkachse verbunden sind, die zwischen dem Griff- und dem Arbeitsscherenabschnitt angeordnet ist, so dass eine relative Verlagerung der zwei Griffe zueinander hin oder weg voneinander eine entsprechende Verlagerung der zwei Arbeitsscherenabschnitte aufeinander zu bzw. weg voneinander bewirkt,
**dadurch gekennzeichnet, dass**
einer (6) aus dem Paar der Scherenabschnitte ein angetriebenes Schneidelement (8) und der andere (4) der Scherenabschnitte ein Vegetationshaltemittel (28) zum Halten von Vegetation, die zwischen dem Paar von Arbeitsscherenabschnitten eingesetzt ist, gegen eine Verlagerung umfasst, wenn die Vegetation (44) mit dem Schneidelement (8) eingreift.

## Revendications

1. Dispositif d'élagage de végétation (2) comprenant :
◆ un dispositif de cisaillement comportant une paire de bras (4, 6) couplés de manière pivotante ;
◆ un moteur (36) équipé d'un arbre de sortie rotatif (34) ;
◆ un élément de coupe (8) couplé à l'arbre de sortie rotatif (34) et agencé pour couper la végétation (44) présentée à celui-ci ;
**caractérisé en ce que** :
◆ l'élément de coupe (8) est monté sur un élément support (20) et agencé pour la rotation autour de celui-ci sous l'influence de l'arbre de sortie rotatif (34).

2. Dispositif d'élagage de végétation selon la revendication 1, dans lequel lesdits moteur (36) et élément de coupe (8) sont associés de manière fonctionnelle à un de ladite paire de bras (4, 6) couplés de manière pivotante.

3. Dispositif d'élagage de végétation selon l'une quelconque des revendications précédentes, dans lequel l'élément de coupe (8), lorsque le dispositif de cisaillement est fermé, est essentiellement inaccessible.

4. Dispositif d'élagage de végétation selon l'une quelconque des revendications précédentes, dans lequel un (6) de ladite paire de bras (4, 6) comprend ledit élément de coupe (8).

5. Dispositif d'élagage de végétation selon la revendication 4, dans lequel l'autre (4) de ladite paire de bras (4, 6) comprend un moyen de retenue de la végétation (28) permettant d'empêcher le déplacement de la végétation (44) insérée entre ladite paire de bras, lorsqu'elle mise en prise avec ledit élément de coupe (8).

6. Dispositif d'élagage de végétation selon la revendication 5, dans lequel ledit moyen de retenue de la végétation (28) comprend une série d'indentations et/ou de saillies disposées vers ledit élément de coupe (8) pour fournir des points de retenue ou de rétention de ladite végétation contre celui-ci.

7. Dispositif d'élagage de végétation selon la revendication 6, dans lequel ladite série de saillies comprend une pluralité de dents inclinées et faisant face audit élément de coupe (8) .

8. Dispositif d'élagage de végétation selon l'une quelconque des revendications 5 à 7, dans lequel ledit autre (4) de ladite paire de bras (4, 6) comprend une paire parallèle de parois latérales (4a, 4b) définissant un canal entre elles permettant de recevoir au moins partiellement ledit élément de coupe (8) lorsque l'élément de coupe est déplacé de manière pivotante vers ledit autre (4) de ladite paire de bras.

9. Dispositif d'élagage de végétation selon la revendication 8, comprenant un élément de butée (42) pour limiter le déplacement pivotant desdits bras l'un vers l'autre pour retenir ledit élément de coupe (8) à une position pivotante prédéterminée par rapport à l'autre (4) de ladite paire de bras de sorte à rester maintenu à l'intérieur dudit canal.

10. Dispositif d'élagage de végétation selon la revendication 8 ou la revendication 9, dans lequel ledit canal comprend une surface intérieure (4c) s'étendant entre lesdites parois latérales parallèles (4a, 4b) définissant une voie d'acheminement de la poussière / des débris communiquant avec une ouverture d'extraction de la poussière / des débris.

11. Dispositif d'élagage de végétation selon la revendication 8, dans lequel ladite paire parallèle de parois latérales (4a, 4b) est profilée pour permettre à au moins une partie dudit élément de coupe (8) de passer complètement à travers ledit canal lorsque ledit élément de coupe est déplacé de manière pivotante vers ledit autre (4) de ladite paire de bras.

12. Dispositif d'élagage de végétation selon la revendication 11, dans lequel lesdites parois latérales ont un profil en forme de V permettant de recevoir et de supporter dans un apex intérieur de celui-ci la végétation à couper.

13. Dispositif d'élagage de végétation selon l'une quelconque des revendications précédentes, dans lequel un ou les deux de la paire de bras (4, 6) comprend un couvercle incliné de manière élastique vers l'élément de coupe et pouvant en être éloigné sous l'application d'une force.

14. Dispositif d'élagage de végétation selon la revendication 13 lorsque combinée à la revendication 4, dans lequel ledit un (6) de ladite paire de bras (4, 6) comprenant l'élément de coupe (8) comprend en outre un couvercle incliné vers l'élément de coupe.

15. Dispositif d'élagage de végétation selon la revendication 14, dans lequel ledit couvercle comprend un moyen de retenue de la végétation (28) présentant une série d'indentations et/ou de saillies disposées vers ledit élément de coupe (8) pour fournir des points de retenue ou de rétention de ladite végétation (44) contre celui-ci.

16. Dispositif d'élagage de végétation selon la revendication 14 ou la revendication 15, dans lequel ledit couvercle incliné est associé audit élément de coupe (8) de sorte à pouvoir être éloigné dudit élément de coupe par ladite végétation (44) que ledit élément de coupe a coupé.

17. Dispositif d'élagage de végétation selon l'une quelconque des revendications précédentes, dans lequel la végétation (44) à élaguer est serrée entre un des bras (4) du dispositif de cisaillement et l'élément de coupe (8) par actionnement pivotant desdits bras.

18. Dispositif d'élagage de végétation selon l'une quelconque des revendications précédentes, dans lequel l'arbre moteur de sortie rotatif (34) comprend une roue d'entraînement dentée (30).

19. Dispositif d'élagage de végétation selon la revendication 18, dans lequel l'élément support (20) comprend une roue menée (32, 464) et une roue d'entraînement (30, 462) autour de laquelle se déplace l'élément de coupe (8, 458) lorsque la roue d'entraînement tourne.

20. Dispositif d'élagage de végétation selon la revendication 18 ou la revendication 19, dans lequel l'élément de coupe (8) tourne à l'intérieur d'un premier plan (A, B, C, D) et les bras de la paire de bras (4, 6) comprennent chacun une surface qui étend chaque côté de ce premier plan.

21. Dispositif d'élagage de végétation selon l'une quelconque des revendications précédentes, dans lequel l'élément de coupe (8) comprend une chaîne (458).

22. Dispositif d'élagage de végétation selon la revendication 21 lorsque combinée à la revendication 17, dans lequel les dents de la roue dentée (462) s'ajustent entre les maillons (22) de la chaîne (458) pour fournir ainsi la force motrice à la chaîne.

23. Dispositif d'élagage de végétation selon la revendication 21 ou la revendication 22, dans lequel la chaîne (458) comprend en outre une pluralité de barbes (26) pour aider à l'élagage de la végétation.

24. Dispositif d'élagage de végétation selon l'une quelconque des revendications 1 à 17, dans lequel ledit élément de coupe (8) comprend une lame à mouvement alternatif linéaire (108).

25. Dispositif d'élagage de végétation selon la revendication 24 lorsque combinée à la revendication 17, comprenant en outre un mécanisme de conversion rotatif linéaire pour faciliter le mouvement alternatif linéaire de ladite lame (108) à partir de l'arbre de sortie rotatif dudit moteur (36).

26. Dispositif d'élagage de végétation selon l'une quelconque des revendications précédentes, comprenant un actionneur (40) permettant de commander le fonctionnement du moteur (36).

27. Dispositif d'élagage de végétation selon la revendication 26, dans lequel l'actionneur (40) est un régulateur de vitesse variable permettant de réguler la vitesse de sortie du moteur (36).

28. Dispositif d'élagage de végétation selon la revendication 26 ou la revendication 27, dans lequel ledit actionneur (40) comprend au moins un interrupteur incliné de manière élastique, monté sur chacun des deux bras, ledit actionneur ne pouvant pas actionner ledit moteur à moins que les deux de l'au moins un interrupteur soient actionnés.

29. Dispositif d'élagage de végétation selon la revendication 18 ou l'une quelconque des revendications 19 à 28, lorsque combinées à la revendication 18, comprenant un dispositif tendeur auto-ajustable (450) pour permettre l'ajustement automatique de l'élément support (20).

30. Dispositif d'élagage de végétation selon la revendication 29 lorsque combinée à la revendication 21, dans lequel l'ajustement dudit élément support (20) a pour effet la tension dudit élément de coupe (8).

31. Dispositif d'élagage de végétation selon la revendication 29 ou 30, dans lequel ledit dispositif tendeur auto-ajustable (450) comprend des moyens de retenue ajustables (468) permettant de fixer de manière amovible ledit élément support par rapport audit dispositif d'élagage conjointement avec un bloc support (466) rigide fixé de manière rigide à un de ladite paire de bras couplés de manière pivotante sur lequel est monté ledit élément support, ledit bloc ayant un élément d'ajustement (480) incliné de manière élastique disposé entre ledit bloc support et ledit élément support pour exercer une force de déplacement sur ledit élément support (20) s'éloignant (490) dudit bloc support lorsque l'organe de retenue est dans une position libérée.

32. Dispositif d'élagage de végétation selon la revendication 31, dans lequel ledit élément de sollicitation comprend un piston sollicité par ressort (474) ayant un premier cliquet (476) et ledit bloc support (466) ayant un deuxième cliquet (478), l'engagement entre lesdits premier et deuxième cliquets empêchant le déplacement dudit piston vers ledit bloc support.

33. Cisailles d'élagage de végétation (2) motorisées comprenant une paire de bras (4, 6), chaque bras comprenant une poignée et une cisaille fonctionnelle, lesquels bras sont reliés de manière pivotante autour d'un pivot disposé entre la poignée et les cisailles fonctionnelles de sorte que le déplacement relatif des deux poignées s'approchant ou s'éloignant l'une de l'autre a pour effet le déplacement correspondant des deux cisailles fonctionnelles s'approchant ou s'éloignant respectivement l'une de l'autre, **caractérisées en ce que**'une (6) desdites cisailles comprend un élément de coupe (8) motorisé et l'autre (4) cisaille comprend un moyen de retenue de la végétation (28) permettant d'empêcher le déplacement de la végétation insérée entre ladite paire de cisailles fonctionnelles lorsque ladite végétation (44) est prise par ledit élément de coupe (8).
